# EUROPÄISCHE PATENTANMELDUNG

(11) **EP 0 981 241 A1**
(43) Veröffentlichungstag der Anmeldung: **23.02.2000**
(21) Anmeldenummer: 99115337.0
(22) Anmeldetag: 03.08.1999
(51) Int. Cl.: H04M 3/523

(54) **Verfahren zur Behandlung von an ein Kommunikationssystem ankommenden Anrufen**

(30) Priorität: 17.08.1998 DE 19837222
(71) Anmelder: SIEMENS AKTIENGESELLSCHAFT, 80333 München (DE)
(72) Erfinder: Schröder, Simone, 44227 Dortmund (DE); Wiebe, David Werner, BR-81310-900 Curitiba-PR (BR); Rist, Claus, 44795 Bochum (DE)

(57) **Zusammenfassung**

Es sollen Anrufe an ein Kommunikationssystem einem Zielanschluß (Service-Kommunikationsanschluß) vermittelt werden. Bei Nichterreichbarkeit dieses Anschlusses wird der betreffende Anruf in einer Warteschlange gehalten und dabei mit akustischen Informationen versorgt. Um die Zeit bis zur Zuteilung dieses Anrufes zu verkürzen, wird unmittelbar mit Beginn der Bearbeitung des anstehenden Anrufes zeitgleich sowohl die akustische Information an den Rufenden übermittelt als auch ständig das Freiwerden des gewünschten Zielanschlusses überprüft. Diese notwendigen Abläufe erfolgen also in einer parallelen Abarbeitung. Dadurch werden auch Totzeiten vermieden, in denen der Anrufer ohne akustische Information verbleibt. Eine solche parallele Abarbeitung kann beispielsweise im Zusammenhang mit einer automatischen Anrufverteilung erfolgen. Der betreffende Anrufer wird permanent unterhalten und unmittelbar in dem Augenblick von einer Ansage oder einer Musikeinspielung weggeschaltet, in dem der Zielanschluß sich meldet.

## Beschreibung

Die Erfindung betrifft ein Verfahren zur Behandlung von Anrufen, die einem durch die Wahlinformation bestimmten Zielanschluß in einem Kommunikationssystem vermittelt werden sollen und die bei seiner aktuellen Nichterreichbarkeit in einer Warteschlange gehalten und dabei mit akustischen Informationen versorgt werden. Ein solcher Zielanschluß kann beispielsweise einer bestimmten Servicenummer zugeordnet sein, über die Anrufer bestimmte Dienstleistungen erhalten können. Über einen solchen Serice-Kommunikationsanschluß kann eines von mehreren zugehörigen Endgeräten erreicht werden. Diese werden von Sachbearbeitern bedient, die als Beantwortungsgruppe für die Bearbeitung z. B. von Kundenanrufen zuständig sind. Ein Zielanschluß, über den keine bestimmte Person, sondern ein zentraler Dienst eines Kommunikationssystems erreicht wird, kann beispielsweise auch einen der Zentrale des Systems zugeordneter Abfrage- und/oder Vermittlungsplatz darstellen. Ein kommender Ruf für derartige Zielanschlüsse wird zunächst vom System angenommen, ohne daß eine gebührenpflichtige Durchschaltung erfolgen muß. Wird über den diesbezüglich implementierten Algorithmus festgestellt, daß zu dem betreffenden Zeitpunkt kein freier Zielanschluß zur Verfügung steht, wird dem Anrufer in Abhängigkeit von der Systemkonfiguration, z. B. ein Rufton, eine Musikeinspielung oder eine Ansage angeschaltet. Es erfolgt dabei üblicherweise die Abarbeitung eines solchen ankommenden Rufes in zeitlich nacheinander gestaffelten einzelnen Schritten. Es erfolgt also z. B. die Anschaltung von akustischen Informationen und die Feststellung der Verfügbarkeit des angeforderten Zielanschlusses jeweils für sich in aufeinanderfolgenden festgelegten Zeitspannen.

Es ist die Aufgabe der Erfindung die Zuteilung eines Rufenden an einen für besondere Dienste zuständigen Zielanschluß zu optimieren. Dies wird durch die Merkmale des Anspruches 1 erreicht.

Der wesentliche Aspekt des erfindungsgemäßen Verfahrens liegt darin, daß unmittelbar mit Beginn der Bearbeitung des jeweils anstehenden Anrufes zeitgleich sowohl die akustische Information an den Rufenden übermittelt wird, als auch ständig das Freiwerden des gewünschten Zielanschlusses überprüft wird. Es erfolgt also nicht eine zeitaufwendige serielle Abarbeitung des kommenden Rufes innerhalb einzelner Instanzen, sondern die Abläufe sind permanent parallel. Dadurch steht ein freier Zielanschluß früher zur Verfügung. Dies wird durch die parallel zur Anschaltung der für die akustischen Informationen zuständigen Einheiten erfolgenden Suche nach einem freien Zielanschlusses ermöglicht. Die Reihenfolge der unterschiedlichen akustischen Informationen, die den Rufenden übermittelbar sind, ist frei konfigurierbar. Durch die ständige Übermittlung solcher Informationen werden Totzeiten, in denen der Anrufenden nichts hört, vermieden. Außerdem werden für den Fall einer Musikeinspielung oder einer Ansage, bei dem eine gebührenpflichtige Durchschaltung notwendig ist, aufgrund der schnelleren Suchzeiten die aufzubringenden Gebühren minimiert.

Die Vorteile der parallel erfolgenden Abläufe bezüglich der anzuschaltenden akustischen Informationen und der Suche nach einem freien Zielanschluß sind insbesondere dann gravierend, wenn der Zielanschluß unter einer Servicenummer erreicht wird, bei der im Rahmen einer automatischen Anrufverteilung ein freies Endgerät, das aus einer Gruppe dieser jeweiligen Servicenummer zugeordneten Endgeräte ausgewählt wird, dem betreffenden Anruf vermittelt wird. Um Verzögerungszeiten zu vermeiden wird erfindungsgemäß mit dem Melden des freien Endgerätes dieses von der aktuell angeschalteten akustischen Information, auch in den Fällen einer laufenden Ansage, unverzüglich auf das betreffende Endgerät umgeschaltet.

Im Rahmen einer automatischen Anrufverteilung wird aufgrund von im System implementierten Algorithmen nach einer vorgegebenen Suchstrategie ein freies Endgerät einer Beantwortungsgruppe gesucht. Eine sinnvolle Strategie besteht darin, daß das am längsten freie Endgerät einer solchen Beantwortungsgruppe zuerst gerufen wird und daß diesem vorzugsweise der am längsten wartende Anrufende vermittelt wird.

Im folgenden wird das erfindungsgemäße Verfahren anhand eines Blockschaltbildes und eines Ablaufdiagrammes näher erläutert. Dabei zeigen
- FIG 1: das Blockschaltbild eines Kommunikationssystem, in dem Funktionen zur automatischen Rufverteilung integriert sind und
- FIG 2: ein Ablaufdiagramm für einen im Rahmen der automatischen Anrufverteilung bearbeiteten Anruf.

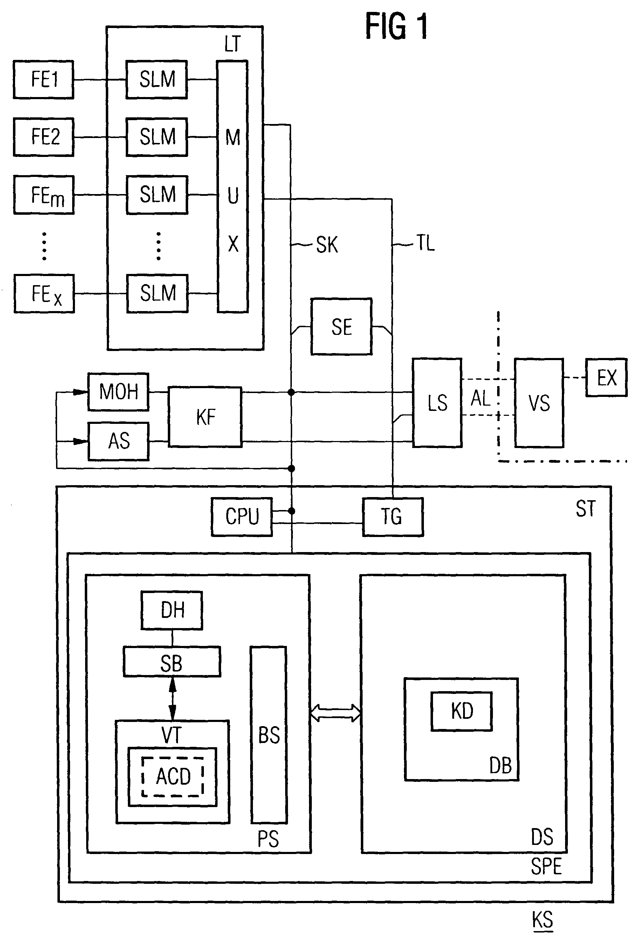

Das Blockschaltbild nach der FIG 1 zeigt ein Kommunikationssystem, beispielsweise ein Kommunikationssystem mittlerer Größe, bei der durch Anrufer eine Servicenummer wählbar ist. Diese Servicenummer repräsentiert z. B. einen Kommunikationsanschluß, dem eine Gruppe von Endgeräten zugeordnet ist. Diese Endgeräte werden von als Agenten bezeichneten Sachbearbeitern bedient, die als Beantwortungsgruppe für die Bearbeitung, z. B. solcher Kundenanrufe zuständig sind. Die Vermittlung dieser einzelnen Anrufe an eines dieser Endgeräte kann mit einer als automatische Anrufverteilung bezeichneten Funktion -in der Fachwelt als ACD-Funktion bekannt- erfolgen. Für das Ausführungsbeispiel soll diese automatische Anrufverteilung ein integraler Bestandteil des Kommunikationssystems in gleicher Weise wie sonstige Leistungsmerkmale sein. Diesbezüglich enthält die zentrale Steuereinheit ST eine entsprechende Steuerprogrammstruktur ACD, mit deren Hilfe bei ankommenden, eine sogenannte Servicenummer betreffenden Anrufen die notwendigen vermittlungstechnischen Abläufe durchgeführt werden. In der FIG 1 in der lediglich die zum Verständnis der Erfindung notwendigen Komponenten dargestellt sind, ist als zentraler Bestandteil des z. B. privaten Kommunikationssystems KS das Koppelfeld KF vorhanden. Durch dieses Koppelfeld sind Endgeräte - von denen die Fernsprechendgeräte FE1 bis FEx schematisch angedeutet sind - miteinander bzw. mit zu einem öffentlichen Kommunikationssystem VS führenden Leitungen AL verbindbar. Das Koppelfeld steht unter dem Steuereinfluß der zentralen Systemsteuerung ST, die neben dem Zentralprozessor CPU eine Speichereinrichtung SPE und eine Takteinheit TG enthält. Der Zentralprozessor steuert sämtliche Vermittlungsvorgänge und besorgt eine Aufbereitung und Zuteilung der Steuerdaten. Der Zugriff zu einer Amtsleitung AL erfolgt über die Schnittstelle LS. Diese kann beispielsweise einen ISDN-Teil beinhalten. Die Peripherie des Kommunikationssystems KS wird ergänzt durch eine Signalisierungseinheit SE, die zur Zeichenversorgung des Kommunikationssystems notwendig ist. Im Kommunikationssystem KS sind Leitungsanschlußeinrichtungen, symbolisiert durch die Leitungsanschlußeinrichtung LT vorhanden. Diese enthalten jeweils Teilnehmeranschlußmodule SLM. Die Teilnehmeranschlußmodule sind über Teilnehmeranschlußleitungen ASL jeweils mit einem der Kommunikationsendgeräte FE verbunden. Sie sind grundsätzlich entweder für den Anschluß von analogen oder für den Anschluß von digitalen Kommunikationsendgeräten vorgesehen. Die vom jeweiligen Kommunikationsendgerät gelieferten digitalen Sprachinformationen werden über eine Multiplexeinrichtung MUX zum Koppelfeld KF weitergegeben. Vermittlungstechnisch gesteuert werden die Leitungsanschlußeinrichtungen LT von der Systemsteuerung ST. Jede Leitungsanschlußeinrichtung ist über einen Signalisierungskanal SK mit der Systemsteuerung verbindbar. Die durch die Systemsteuerung angebotenen Taktsignale werden über eine Taktleitung TL an die Leitungsanschlußeinrichtungen verteilt. Durch die Einheit TG wird symbolisiert, daß durch sie die Taktsignale zur Verfügung gestellt werden.

Der Systemprozessor CPU der Systemsteuerung ST hat Zugriff zu den in der Speichereinrichtung SPE abgelegten Informationen. Diese Speichereinrichtung ist grundsätzlich in dem Programmspeicher PS und in den Datenspeicher DS unterteilt. Im Programmspeicher PS sind unter anderen das Betriebssystem BS und die zu ihm bezüglich der Peripherietechnik, der Betriebstechnik, der Sicherheitstechnik und der Vermittlungstechnik gehörenden Programme abgespeichert. Das Betriebssystem BS koordiniert die für das Kommunikationssystem KS typische Vielzahl von quasi gleichzeitig anfallenden und auch zu erledigenden Einzelaufgaben. Seine wesentliche Aufgabe besteht darin, in Abhängigkeit von eingetroffenen oder innerhalb der Systemsteuerung gebildeten Anreize dem Systemprozessor CPU, der die eigentliche ausführende Einheit der Systemsteuerung ist, Verarbeitungsvorschriften zuzuweisen. Diese beinhalten eine Reaktion auf die betreffenden Anreize. Für jeden möglichen Anreiz steht deshalb in der Systemsteuerung eine anreizindividuelle Verarbeitungsvorschrift zur Verfügung, die als jeweiliges Programmodul im Programmspeicher PS hinterlegt ist. In der Figur ist das vermittlungstechnische Programmodul VT stellvertretend für die übrigen Module angedeutet. Mit ACD ist dasjenige Modul bezeichnet, das symbolisch für die zur Realisierung der im Zusammenhang mit der automatischen Anrufverteilung insgesamt notwendigen Steuerabläufe steht.

In dem Speicherteil DS ist als Teileinheit der Datenbasis DB der Bereich KD angedeutet. In diesem Speicherbereich sind die sogenannten Kundendaten abgelegt. Der Datenspeicher DS dient unter anderem der Aufnahme von temporären Daten zur Programmablaufsteuerung. Es werden in ihm auch Daten übernommen, die während eines durch ein Endgerät initiierten Verbindungsaufbaus bzw. während einer Gesprächsverbindung abgefragt bzw. erzeugt werden.

Für jedes der dargestellten Fernsprechendgeräte FE ist zu seiner Steuerung ein an das jeweilige Endgerät angepaßte Leitungsprogrammodul vorhanden, das im Programmspeicher PS durch das Modul DH symbolisiert ist. Jedes dieser vorhandenen Module DH bietet eine systemeinheitliche Schnittstelle zur vermittlungstechnischen Strukturebene, die durch das bereits erwähnte Vermittlungsprozedur-Programmodul VT repräsentiert ist. Der Informationsaustausch zwischen den beiden genannten Struktur- bzw. Steuerungsebenen erfolgt mittels definierter Meldungen, die beispielsweise über die angedeutete Software-Bus-Struktur SB übertragen werden. Diese kann als integraler Bestandteil des Betriebssystems angesehen werden.

Die automatische Anrufverteilung ist integraler Bestandteil des Kommunikationssystems in gleicher Weise wie sonstige Leistungsmerkmale. Die ACD-Funktionalität ist für den ankommenden Fernsprechverkehr maßgebend, wobei dieser Telefonverkehr in aller Regel sachbezogener Natur ist. Der Anrufer möchte z. B. über eine ihm bekannte Servicenummer nicht eine bestimmte Person sprechen, sondern eine Dienstleistung in Anspruch nehmen. Hierzu können Sachbearbeiter, die für die Bearbeitung der Kundenanrufe zuständig sind, in bestimmte Beantwortungsgruppen gegliedert werden. Innerhalb der für die Erreichbarkeit einer Dienstleistung zuständigen Beantwortungsgruppe werden z. B. die Verbindungen in der Reihenfolge ihres Eintreffens dem am längsten freien Arbeitsplatzendgerät zugeteilt. Damit wird dann eine gleichmäßige Auslastung dieser Arbeitsplatzendgeräte, die von sogenannten Agenten als Sachbearbeiter bedient werden, erreicht.

Einem solchen Anrufverteilungsmechanismus liegt üblicherweise das Verfahren des Warteschlangenkonzeptes zugrunde, das es ermöglicht, eine größere Anzahl eingehender Rufe anzunehmen, als aktuell bearbeitet werden können. Damit erreicht man, daß ein Anrufer keinen Besetztton übermittelt bekommt, sondern es sind Melde- und/oder Warteansagen bzw. Musikeinspielungen üblich. Damit wird dem Anrufer signalisiert, daß sein Anruf bereits entgegengenommen und bearbeitet wird. Ausgehend von einer automatischen Anrufverteilung, die durch eine externe Anwendung realisiert wurde, erfolgt üblicherweise eine serielle Abarbeitung eines kommenden Rufes durch einzelne Instanzen innerhalb vorgegebener Zeitangaben. Beispielsweise erfolgt für einen Rufer die Einspielung einer ersten Ansage, die beispielsweise einen speziellen Begrüßungstext des Unternehmens betrifft. Ist diese Ansage vollständig beendet, so erfolgt nach Zeit der Versuch diesen Anruf auf einen freien Teilnehmer zu vermitteln. Meldet sich nach einem vorgegebenen Zeitablauf ein solcher Teilnehmer nicht, dann wird z. B. eine zweite Ansage eingespielt und der Ruf von dem betreffenden Teilnehmer weggenommen. Nach Zeitablauf wird der Rufer in ein zentrales Wartefeld vermittelt und von dort auf einen anderen freien Teilnehmer einer ACD-Beantwortungsgruppe verteilt.

Im Gegensatz hierzu findet bei der erfindungsgemäßen Lösung zeitgleich die Suche nach einem freien Teilnehmer, einem sogenannten Agenten einer Beantwortungsgruppe statt und es erfolgt gleichzeitig mit dieser Suche die Anschaltung von akustischen Informationen. Ein Anrufer wird also unmittelbar mit der Annahme seines Anrufes bis zur tatsächlichen Vermittlung eines Agenten mit einer akustischen Information versorgt. Dadurch, daß diese grundsätzlich erforderlichen Abläufe parallel zueinander vorgenommen werden, können solche Anrufe schneller bearbeitet werden. Durch die Tatsache, daß diese Abläufe nicht nacheinander erledigt werden, ergeben sich nicht nur schnellere Suchzeiten, sondern es werden auch Totzeiten, in denen der Anrufer nichts hört, vermieden.

Sowohl die einzelnen Ansagen als auch die einzuspielende Musik kann in systeminternen Bausteinen abgespeichert sein. Dies ist durch die beiden Module AS und MOH (music on hold) in der FIG 1 angedeutet. Diese Module werden zur Festlegung der betreffenden Anschaltezeitspannen durch die Steuerung beeinflußt. Es kann auch vorgesehen sein, daß sowohl die Ansagen als auch die Musikeinspielung durch an das System angeschlossene zusätzliche Geräte geliefert werden. Solche Geräte können zum Starten z. B. einer Ansage, ein Signal vom System erhalten und nach Beendigung des Ansagetextes selbständig abschalten, wobei sie dann eine entsprechende Endemeldung zur Synchronisation dem System übermitteln.

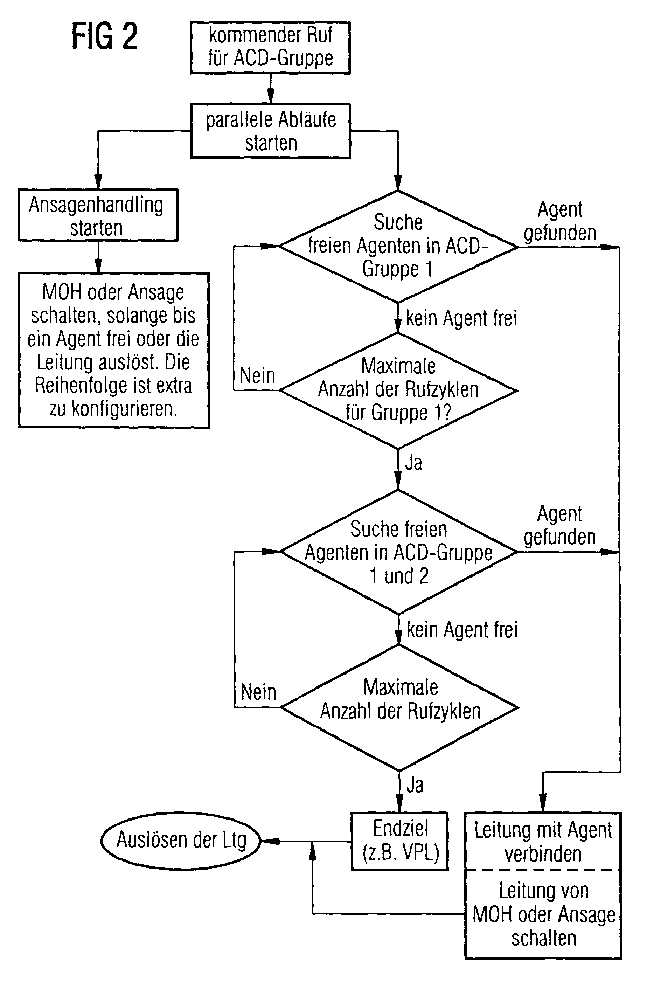

Die in ihren Grundzügen bereits erläuterten Abläufe bei der Bearbeitung eines sogenannten ACD-Rufes sind durch das Diagramm nach der FIG 2 veranschaulicht. Mit einem ankommenden Ruf für eine ACD-Beantwortungsgruppe, die beispielsweise aus den Fernsprechendgeräten F1 bis Fm gebildet wird, werden die bereits geschilderten parallelen Abläufe gestartet. Es wird das Ansagenhandling aktiviert. Das bedeutet, daß entweder eine Ansage oder eine Musikeinspielung MOH insgesamt solange erfolgt, bis ein freier Agent gefunden wird oder die betreffende Leitung auslöst. In welcher Reihenfolge unterschiedliche Ansagetexte oder die Musikeinspielung erfolgen soll, ist entsprechend zu konfigurieren. Neben den einzuspielenden akustischen Informationen wird zeitgleich mit der Suche nach einem freien Agenten in der ACD-Gruppe, beispielsweise einer Gruppe 1, die die genannten Endgeräte beinhalten soll, begonnen. Wird ein freier Agent gefunden, so erfolgt die Verbindung der betreffenden Leitung mit dem Endgerät, das dieser Agent bedient. Die Leitung wird dann sofort von der akustischen Information, Musikeinspielung oder Ansage, abgeschaltet. Ist kein Agent frei, so kann wie im Diagramm angedeutet, bis zu einer maximalen Anzahl von festgelegten Rufzyklen weitergesucht werden. Bei der Suche nach einem freien Agenten kann auch, wie angedeutet eine weitere ACD-Gruppe, beispielsweise eine Gruppe 2 einbezogen werden. Wird dabei ein Agent gefunden, so erfolgt in der bereits geschilderten Weise die Verbindung zu dem Endgerät dieses Agenten. Ist kein Agent frei, so kann nach einer weiteren Suchzeit, die eine bestimmte maximale Anzahl von Rufzyklen umfaßt, zu einem in der Anlage konfigurierbaren Endziel, beispielsweise einem Vermittlungsplatz, geschaltet werden. Die geschilderte mögliche Suche in einer weiteren Gruppe soll grundsätzlich die Wartezeit für einen Rufenden verkürzen.

Für das Ausführungsbeispiel wurde die Aktivierung von parallelen Abläufen hinsichtlich der Suchvorgänge und der Anschaltung von akustischen Informationen für eine ACD-Funktionalität beschrieben. Grundsätzlich können solche parallelen Abläufen immer dann vorgesehen sein, wenn aus einer Anzahl von möglichen Zuteilungen einer Verbindung ein hierfür freies Ziel gesucht wird.

## Patentansprüche

1. Verfahren zur Behandlung von Anrufen, die einem durch die Wahlinformation bestimmten Zielanschluß in einem Kommunikationssystem vermittelt werden sollen und die bei seiner aktuellen Nichterreichbarkeit in einer Warteschlange gehalten und dabei mit akustischen Informationen versorgt werden,
**dadurch gekennzeichnet,**
daß unmittelbar mit Beginn der Bearbeitung des anstehenden Anrufes zeitgleich sowohl die akustische Information an den Rufenden übermittelt wird, als auch ständig das Freiwerden des gewünschten Zielanschlusses überprüft wird.

2. Verfahren nach Anspruch 1,
**dadurch gekennzeichnet,**
daß während der Überprüfungszeit unmittelbar aufeinanderfolgend unterschiedliche akustische Informationen dem Rufenden übermittelbar sind und daß ihr Reihenfolge frei konfigurierbar ist.

3. Verfahren nach Anspruch 2,
**dadurch gekennzeichnet,**
daß die akustischen Informationen in Form einer spezifischen Tonfolge, einer Ansage oder einer Musikeinspielung übermittelt wird.

4. Verfahren nach einem der Ansprüche 1 bis 3,
**dadurch gekennzeichnet,**
daß der Zielanschluß unter einer Servicenummer erreicht wird, aufgrund der im Rahmen einer automatischen Anrufverteilung einem freien Kommunikationsendgerät, das aus einer Gruppe von dieser jeweiligen Servicenummer zugeordneten Kommunikationsendgeräten ausgewählt wird, der betreffende Anruf vermittelt wird.

5. Verfahren nach Anspruch 1 oder 4,
**dadurch gekennzeichnet,**
daß mit dem Melden des freien Kommunikationsendgerätes von der aktuell angeschalteten akustischen Information, auch in den Fällen einer laufenden Ansage der Anruf unverzüglich auf das betreffende Kommunikationsendgerät umgeschaltet wird.

6. Verfahren nach den Ansprüche 4 bis 5,
**dadurch gekennzeichnet,**
daß innerhalb einer vorgegebenen Suchstrategie nach einem freien Kommunikationsendgerät durch im Kommunikationssystem implementierte Algorithmen gesucht wird.

7. Verfahren nach Anspruch 6,
**dadurch gekennzeichnet,**
daß das am längsten freie Kommunikationsendgerät zuerst gerufen wird und daß diesem vorzugsweise der am längsten wartende Anruf vermittelt wird.
